# EUROPEAN PATENT APPLICATION

(11) **EP 1 462 932 A2**
(43) Date of publication of application: **29.09.2004**
(21) Application number: 04007010.4
(22) Date of filing: 24.03.2004
(51) Int. Cl.: G06F 9/30, G06F 15/78

(54) **Vector processor and register addressing method**

(30) Priority: 28.03.2003 JP 2003092371
(71) Applicant: SEIKO EPSON CORPORATION, Shinjuku-ku, Tokyo 163-0811 (JP)
(72) Inventor: Isomura, Masakazu, Suwa-shi Nagano-ken 392-8502 (JP)
(74) Representative: Hoffmann, Eckart, Dipl.-Ing.

(57) **Abstract**

The object of the invention is to efficiently perform a vector operation using a vector register. Avector processor is provided with a vector register forming a ring buffer, and any address of the ring buffer can be specified as the top address. Accordingly, when multiple vector data to be processed are overlapped, it is possible to circularly read or write the vector data stored in one vector register without storing the vector data in separate vector registers. Thus, it is possible to prevent the same data from being redundantly read as well as to decrease register resources to be required, thereby enabling an efficient vector operation using a vector register.

## Description

### BACKGROUND OF THE INVENTION

### Field of the Invention

The present invention relates to a vector processor for performing an operation using a vector register, and a register addressing method.

### Description of the Related Art

Traditionally, vector operations have been used, for example, in iterative operations in technological calculations, arithmetic operations on pixel data or arithmetic operations for array data in image processing.

In a vector operation, vector data is read from a memory and stored on a vector register, and then a particular vector operation, such as addition or multiplication between vector data, is performed.

For example, when performing an arithmetic operation such as addition on adjoining two data in an array, n (n: a natural number) array data from the top are stored in one vector register and n array data from the second top are stored in the other vector register. By executing an arithmetic instruction, such as addition, on these two vector registers, operations are performed between element data with the same addresses in the vector registers to perform a batch operation of array data.

As a technique related to a vector operation, the technique described in Japanese Patent Laid-Open No. 60-24672 is known.

In this published unexamined patent application, there is discloseda technique for improvingefficiencyof arithmetic processing in performing an arithmetic operation on two adjoining data in an array as described above.

When performing the above-mentioned arithmetic operation, the second to the (n-1) th data (the second last of the array data to be arithmetically processed) is read twice to be stored in the two registers.

Accordingly, in the technique described in the published unexamined patent application, the top to the (n+1) th data (the last of the array data to be arithmetically processed) of the array to be arithmetically processed is read once and stored in a predetermined register. The data in the register is then distributed to a vector register for storing a predetermined number of array data from the top and a vector register for storing a predetermined number of array data from the second by a distribution circuit for distributing the data in the register to multiple vector registers and storing the data therein, and then the data is stored in the two registers.

According to this procedure, when reading array data from a memory, it is avoided to redundantly read the same data, and thereby a vector operation is efficiently performed.

### (Patent document 1)

### Japanese Patent Laid-Open No. 60-24672

In the technique described in Japanese Patent Laid-Open No. 60-24672, however, a lot of register resources are required because the vector data read from the memory is stored in a predetermined register once and then distributed to two vector registers.

Therefore, there are problems that the circuit scale is increased and that pressure on register resources causes decrease in the processing efficiency.

Furthermore, low power consumption of equipment has been emphasized recently, and it is common that power is supplied to a flip flop circuit constituting a register onlywhenwriting is performed. However, in the technique described in Japanese Patent Laid-Open No. 60-24672, since the same data is stored in multiple vector registers at the same time, the targets to supply clocks to are increased in number and therefore consumption power is also increased.

The object of the present invention is to efficiently perform a vector operation using a vector register.

### SUMMARY OF THE INVENTION

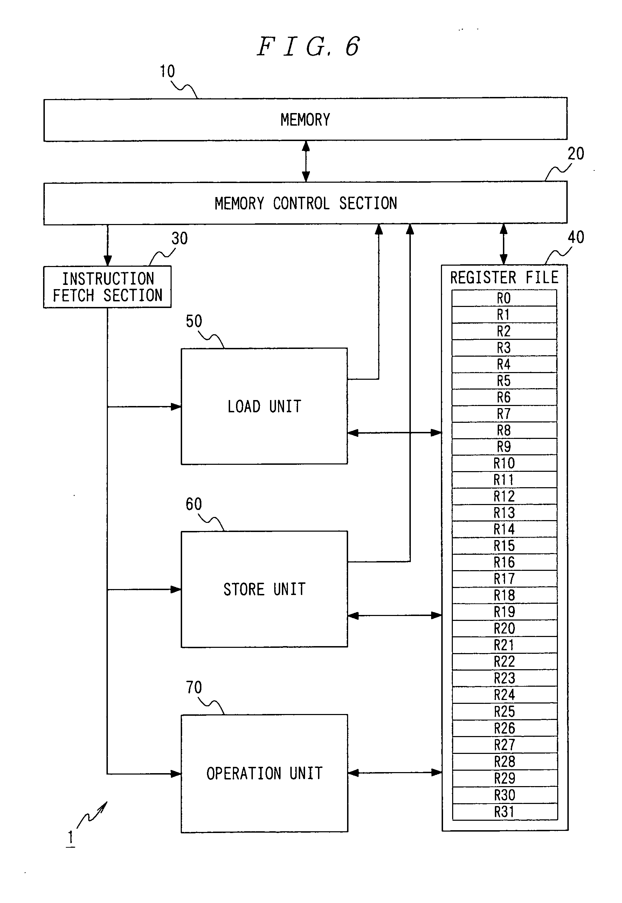

To achieve the above object, the present invention is:
a vector processor for processing vector data comprising multiple element data using a register, the vector processor comprising: a register usable as a vector register comprising multiple element registers (for example, a register file 40 in FIG. 6) ; and an addressing circuit for circularly specifying addresses of the vector register with the address of any element register of the vector register as the top (for example, a first source register determination circuit 72 and the like) .

The resister is a set of multiple scalar registers, and, by any of the scalar registers being specified as the top, the addresses of the multiple scalar registers are circularly specified.

The register comprises a vector register, any element register of the vector register being specifiable as the top.

When performing a vector operation on data stored in the register, element data of the vector register are sequentially read from the addresses of the vector register beginning with the address specified as the top, and reading of the element data is continuable by returning to the top address if the end address is reached.

When writing the results of a vector operation to the register, element data of the vector register are sequentially written to the addresses of the vector register beginning with the address specified as the top, and writing of the element data is continuable by returning to the top address if the end address is reached.

The present invention is:
a register addressing method used for processing of vector data comprisingmultiple element data, wherein a predetermined element register is treated as a vector register comprising multiple element registers, and, by specifying the address of any element register of the vector register as the top, the addresses of the element registers of the vector register are circularly specified.

According to the present invention, a register usable as a vector register forming a ring buffer is provided, and any address of the ring buffer can be specified as the top address.

Accordingly, when multiple vector data to be processed are overlapped, it is possible to circularly read or write the vector data stored in one vector register without storing the vector data in separate vector registers.

Thus, it is possible to prevent the same data from being redundantly read as well as to decrease register resources to be required, thereby enabling an efficient vector operation using a vector register.

### BRIEF DESCRIPTION OF THE DRAWINGS

FIG. 1 shows a vector register VR having eight (8) element registers R0 to R7;
FIG. 2 shows the state of the vector register VR in the cycle "2";
FIG. 3 shows the state of the vector register VR in the cycle "7";
FIG. 4 shows the state of the vector register VR in the cycle "8";
FIG. 5 shows the state of the vector register VR in the cycle "9";
FIG. 6 shows a configuration of a vector processor 1 to which the present invention is applied;
FIGS. 7A to 7C show examples of a data format for an instruction code;
FIG. 8 shows codes assigned to the registers R0 to R31, respectively;
FIG. 9 is a block diagram showing the internal configuration of an operation unit 70;
FIG. 10 shows a configuration example for a first source register determination circuit 72; and
FIG. 11 shows codes corresponding to vector element numbers.

### DETAILED DESCRIPTION OF THE PREFERRED EMBODIMENTS

An embodiment of a vector processor according to the present invention is now described below with reference to the drawings.

The vector processor according to the present invention is provided with a vector register forming a ring buffer and enables access to data beginning with any address of the vector register.

The basic idea of the present invention is described first. Here, description will be made on the case where addition is performed on two adjoining data in an array (for example, the case of determining a mean value between two adjoining pixels in image processing) as an example.

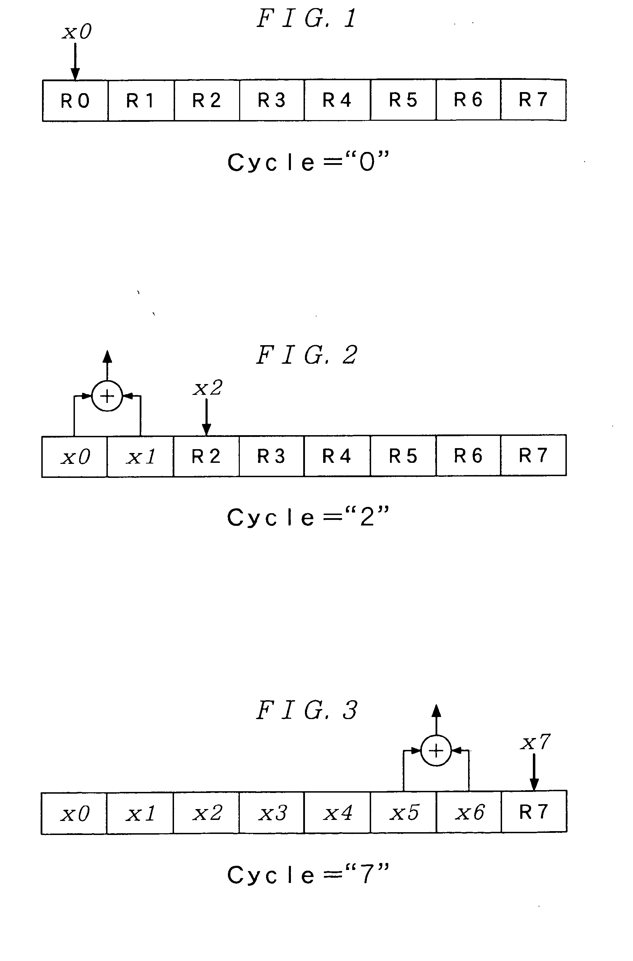

FIG. 1 shows a vector register VR having eight (8) element registers R0 to R7.

In the present invention, without using two vector registers for storing vector data to be added, processing similar to the processing performed by using two vector registers is performed with one vector register VR. The "vector register" here includes a scalar register used as a vector register.

First, a vector processor with a vector register VR is given a load instruction to load vector data comprising 8 element data x0 to x7 and an addition instruction delayed by two cycles from the load instruction.

Then, the element data x0 is written to the element register R0 of the vector register VR in the cycle "0", and the subsequent element data are sequentially written to the subsequent element registers in each one cycle.

In the cycle "2", the addition instruction is executed after two-cycle delay from the load instruction started in the cycle "0".

FIG. 2 shows the state of the vector register VR in the cycle "2".

In FIG. 2, the element data x0 and x1 are already stored in the element registers R0 and R1, respectively, and the element data x2 is being written to the element register R2. In FIG. 2, the addition instruction has been started, and the element data stored in the R0 and R1 are being added.

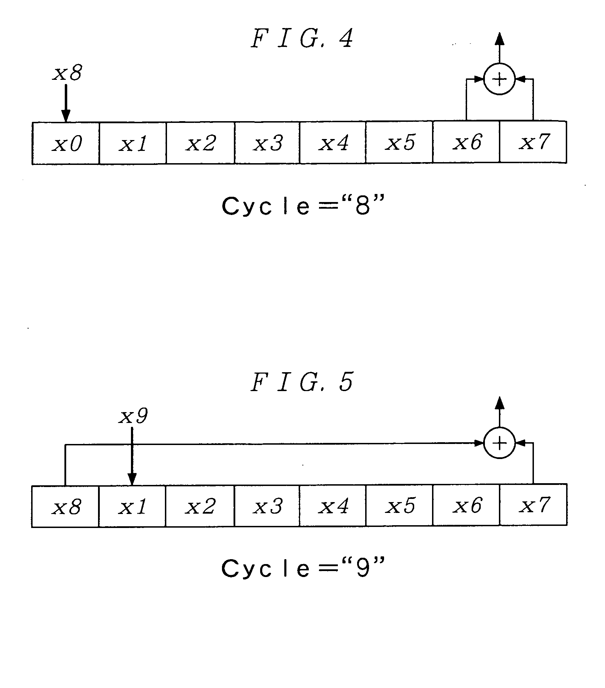

If the addition instruction is continuously executed after two-cycle delay from the load instruction, the state in the cycle "7" will be as shown in FIG. 3.

In FIG. 3, as for the load instruction, it is shown that the element data x7 is being written to the element register R7, and the load instruction started in the cycle "0" ends in the cycle "7". As for the addition instruction, it is shown that the element data stored in the element registers R5 and R6 are being added.

Then, the vector processor is given the second load instruction in the cycle "8" to process the subsequent data.

In the cycle "8", the state of the vector register VR is as shown in FIG. 4.

In FIG. 4, as for the load instruction, it is shown that the processing returns to the top to write the element data x8 to the element register R0. As for the addition instruction, it is shown that the element data stored in the element registers R6 and R7 are being added. The addition instruction started in the cycle "2" is still executing addition because it is delayed by two cycles from the load instruction.

The processing then proceeds to the cycle "9", the eighth cycle (the final cycle) of the addition instruction started in the cycle "2".

FIG. 5 shows the state of the vector register VR in the cycle "9".

In FIG. 5, as for the addition instruction, it is shown that the element data x7, one data to be added, is being read from the element register R7.

In this case, as for the other element data to be added, the processing returns to the top of the vector register VR to read the element data x8 stored in the element register R0. That is, the element data x7 and x8 stored in the element registers R7 and R0 are to be added.

The cycles "0" to "9" are then repeated as appropriate.

In this way, even when element data at an address beyond the final address of the vector register is referred to by an addition instruction, the element data to be referred to can be easily read and the subsequent processing canbe smoothly performed because the vector register forms a ring buffer.

It is not necessary to redundantly read the same element data from a memory. Furthermore, it is possible to perform an operation on element data of vector data having more than eight elements with the use of one vector register capable of storing eight elements, and thereby a vector operation can be efficiently performed.

Description will be now made on the configuration of a vector processor according to the present invention.

FIG. 6 shows a configuration of a vector processor 1 to which the present invention is applied.

In FIG. 6, the vector processor 1 is configured to include a memory 10, a memory control section 20, an instruction fetch section 30, a register file 40, a load unit 50, a store unit 60 and an operation unit 70.

The memory 10 stores instruction codes to be given to the vector processor 1 and data to be processed.

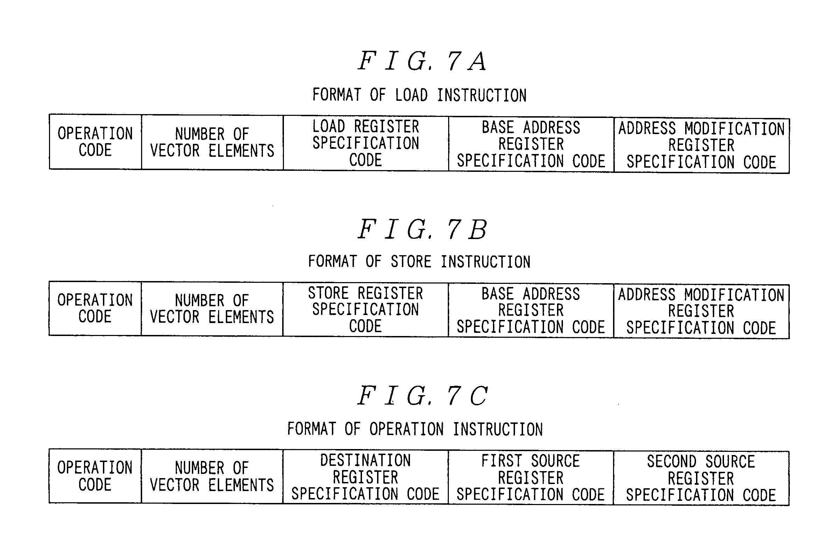

FIGS. 7A to 7C show examples of a data format for an instruction code. The figures 7A to 7C show a format of a load instruction, a format of a store instruction, and a format of an operation instruction, respectively. In FIGS. 7A to 7C, each instruction code includes information required for executing the instruction, such as an operation code indicating the kind of the instruction by the instruction code, the number of elements of vector data to be processed by the instruction and register specification codes.

Thememorycontrol section 20 controls access to thememory 10, that is, reading and writing of data. For example, the memory control section 20 reads data from an address of the memory 10 specified by the load unit 50 or the store unit 60, or outputs data read from the memory 10 to the register file 40.

The instruction fetch section 30 fetches an instruction code from the memory 10 via the memory control section 20 and temporarily stores it.

The register file 40 temporarily stores data read from the memory 10 and operation results.

The load unit 50 reads an instruction code or data from the memory 10 when the instruction code stored in the instruction fetch section 30 is a load instruction.

The store unit 60 writes data to the memory 10 when the instruction code stored in the instruction fetch section 30 is a store instruction.

The operation unit 70 performs processing on predetermined data stored in the register file 40 when the instruction code stored in the instruction fetch section 30 is a predetermined operation instruction.

The register file 40 and the operation unit 70 will be now described in detail.

Description will be made on the register file 40 first.

As described in FIG. 6, the register file 40 is configured to include thirty-two registers R0 to R31 on which reading and writing can be performed.

In the register file 40, each of a set of registers R0 to R7, a set of registers R8 to R15, a set of registers R16 to R23 and a set of registers R24 to R31 can be used as a vector register having a function of a ring buffer.

In this case, in order to enable the registers R0 to R31 as vector register having a function of a ring buffer, the vector register is provided with a function of a ring buffer, and specification of any address as the top address is enabled. Furthermore, scalar registers may be used as a vector register.

That is, by arrangingpredetermined scalar registers into groups and enabling specification as to each of the groups, the scalar registers can be used as a vector register. In this case, it is possible to specify any address of the set of scalar registers as the top address. Furthermore, since a scalar register essentially can be individually specified, the addresses can be circularly specified as those of a ring buffer.

In the register file 40 shown in FIG. 6, a five-bit code is assigned to each of the registers R0 to R31.

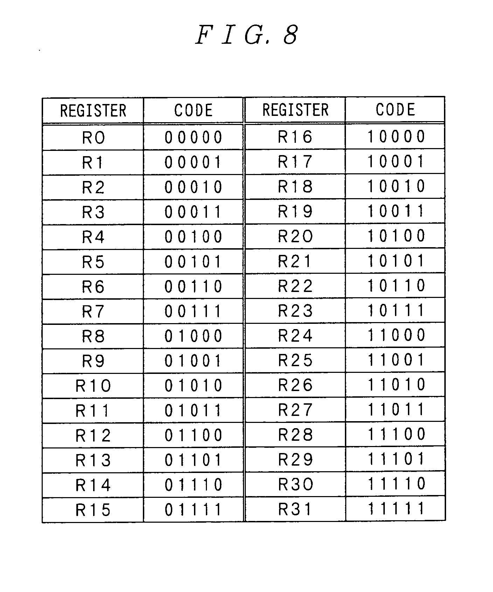

FIG. 8 shows codes assigned to the registers R0 to R31, respectively.

By inputting a particular code among the codes shown in FIG. 8 as a selection signal, reading fromandwritinga register corresponding to the code can be performed.

In FIG. 8, the two higher-order bits of the five-bit code is a code to specify a vector register, and the three lower-order bits is a code to specify an address in the vector register.

The operation unit 70 will be now described.

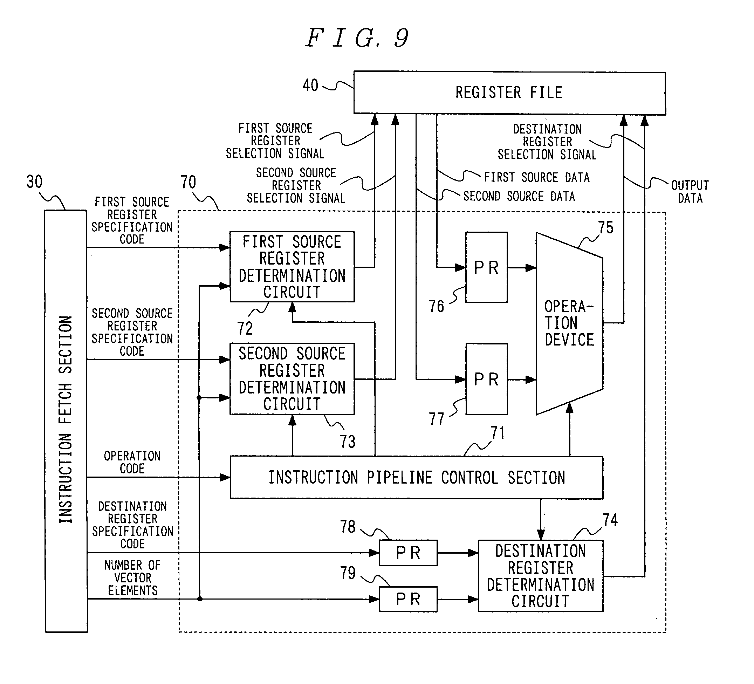

FIG. 9 is a block diagram showing the internal configuration of the operation unit 70.

In FIG. 9, the operation unit 70 is configured to include an instruction pipeline control section 71, a first source register determination circuit 72, a second source register determination circuit 73, a destination register determination circuit 74, an operation device 75 and pipeline registers (PRs) 76 to 79.

The pipeline control section 71 controls the entire operation unit 70.

The first source register determination circuit 72 generates a signal for selecting a first source register (a first source register selection signal) based on a first source register specification code included in an instruction code.

The second source register determination circuit 73 generates a signal for selecting a second source register (a second source register selection signal) based on a second source register specification code included in the instruction code.

The destination register determination circuit 74 generates a signal for selecting a destination register (a destination register selection signal) based on a destination register specification code included in the instruction code.

Description will be now made on the configurations of the first source register determination circuit 72, the second source register determination circuit 73 and the destination register determination circuit 74.

Since the configurations of the first source register determination circuit 72, the second source register determination circuit 73 and the destination register determination circuit 74 are the same, only the first source register will be described as an example.

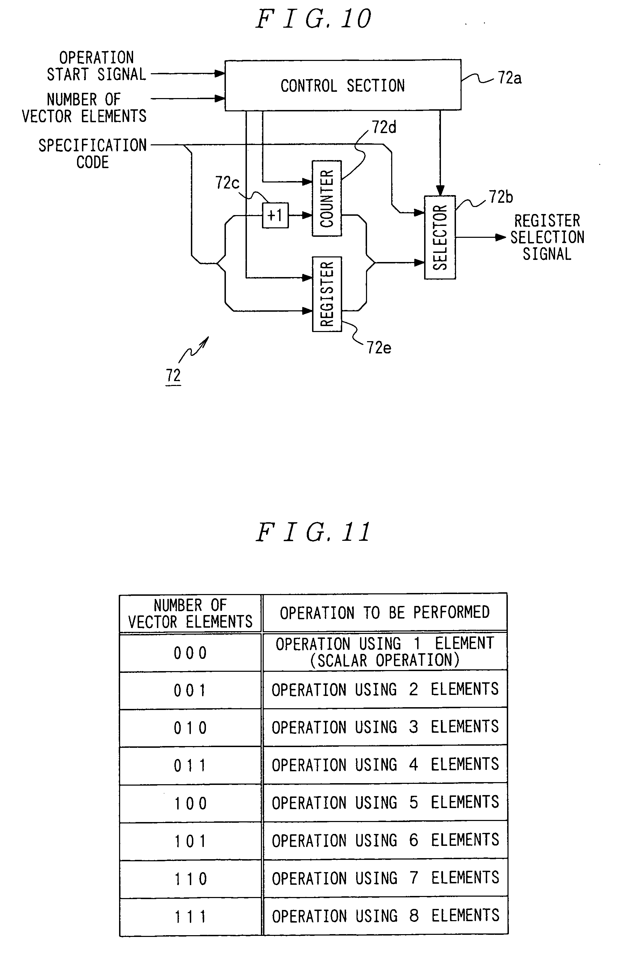

FIG. 10 shows a configuration example for a first source register determination circuit 72.

In FIG. 10, the first source register determination circuit 72 is configured to include a control section 72a, a selector 72b, an incrementer 72c, a counter 72d and a register 72e.

The control section 72a controls the entire first source register determination circuit 72 based on an operation start signal inputted by the instruction pipeline control section 71 and the number of vector elements inputtedby the instruction fetch section 30.

The selector 72b selects and outputs the first source register specification code inputted by the instruction fetch section 30 in the cycle "0", and selects and outputs the first source register selection signal inputted by the counter 72d and the register 72e in the cycles other than the cycle "0".

The incrementer 72c receives the three lower-order bits of the five-bit first source register specification code, adds "1" thereto and outputs it to the counter 72d.

The counter 72d stores the three-bit code inputted by the incrementer 72c, in the cycle "0".

Furthermore, it is determined whether or not the counter 72d is switched to a count enable state in response to the direction of the control section 72a and, in the count enable state, performs a count-up operation of adding "1" to a stored code and update it.

The register 72e receives the two higher-order bits of the first source register specification code and retains the code while one vector operation is being performed.

In the first source register determination circuit 72 with such a configuration, if the first source register specification code is a code "10010" which indicates the register R18 and the number of vector elements is "8", for example, then "10010", "10011", "10100", "10101", "10110" and "10111" are sequentially outputted as first source register selection signals, and then "10000" and "10001" are outputted. That is, the registers R18, R19, R20, R21, R22, R23, R16 and R17 are selected by the first source register selection signals in that order.

In other words, it is possible to use the registers R16 to R23 as a vector register forming a ring buffer as well as to specify any of the addresses of the registers as the top address.

Returning to FIG. 9, the operation device 75 actually performs an operation such as addition based on the direction of the instruction pipeline control section 71.

The PRs 76 to 79 store data processed at each stage of a pipeline processing.

The operation will be now described.

First, description will be made on the operation of the entire vector processor 1 with reference to FIG. 6.

When processing is performed by the vector processor 1, an instruction code is read from the memory 10 to the instruction fetch section 30 via the memory control section 20.

The instruction code is outputted to each of the load unit 50, the store unit 60 and the operation unit 70 from the instruction fetch section 30.

Each of the load unit 50, the store unit 60 and the operation unit 70 to which the instruction code has been inputted decodes the instruction code and executes the instruction only when it is appropriate therefor.

Description will be described below on the operation to be performed according to the contents of the instruction code.

### (When the instruction code is a load instruction)

When the instruction code inputted by the instruction fetch section 30 is a load instruction, the load unit 50 outputs signals for selecting each of the base address register and the address modification register specified in the instruction code (see FIG. 7A), respectively, to the register file 40.

The values stored at the addresses (a base address value and an address modification value) are read in the load unit 50.

The load unit 50 generates a load address (an address from which data should be read) of the memory 10 based on the base address value and the address modification value and outputs it to the memory control section 20.

When the load address is inputted, the memory control section 20 reads data (load data) from a corresponding address of the memory 10 and outputs the load data to the register file 40. The load unit 50 outputs a signal for selecting the destination register specified in the instruction code to the register file 40 at the right time when the load data is outputted to the register file 40 from the memory control section 20.

The load data is then written to the destination register in the register file 40.

### (When the instruction code is a store instruction)

When the instruction code inputted by the instruction fetch section 30 is a store instruction, the store unit 60 outputs a signal for selecting a destination register specified in the instruction code (see FIG. 7B) to the register file 40.

The value (store data) stored at the destination address is then read in the store unit 60.

The store unit 60 outputs the read store data to the memory control section 20.

The store unit 60 also outputs signals for selecting the base address register and the address modification register specified in the instruction code, respectively, to the register file 40.

The base address value and the address modification value stored at the addresses are read in the store unit 60.

The store unit 60 generates a store address of the memory 10 (an address to which data should be written) based on the base address value and the address modification value, and outputs the store address to the memory control section 20 at the right time when the store data is outputted to the memory control section 20.

When the store data and the store address are inputted, the memory control section 20 writes the store data to a corresponding address of the memory 10.

### (When the instruction code is an operation instruction)

When the instruction code inputted by the instruction fetch section 30 is an operation instruction, the operation unit 70 outputs signals for selecting the first source register and the second source register specified in the instruction code (see FIG. 7C) to the register file 40.

The values stored at the addresses (the first source data and the second source data) are then read in the operation unit 70.

The operation unit 70 performs an operation on the first source data and the second source data, and outputs the operation results to the register file 40. The operation unit 70 outputs a signal for selecting the destination register specified in the instruction code to the register file 40 at the right time when the operation results are outputted to the register file 40.

The operation results are then written to the destination register in the register file 40.

The operation of the operation unit 70 will be now described in detail with reference to FIG. 9.

An operation code and the number of vector elements are inputted to the instruction pipeline control section 71 of the operation unit 70 first from the instruction fetch section 30.

The number of vector elements inputted then is a code to specify the number of element data on which a vector operation should be performed, and it is, in this example, a three-bit code as shown in FIG. 11.

When the operation code inputted by the instruction fetch section 30 is an operation instruction, the instruction pipeline control section 71 outputs an operation start signal to the first source register determination circuit 72 and the second source register determination circuit 73.

When the operation start signal is inputted by the instruction pipeline control section 71, the first source register determination circuit 72 receives the first source register specification code and the number of vector elements from the instruction fetch section 30.

Then, the first source register determination circuit 72 sequentially outputs first source register selection signals for selecting a particular register to the register file 40 based on the number of vector elements received from the instruction fetch section 30.

Particular first source data are then sequentially inputted to the PR 76 from the register file 40.

The second source data are also sequentially inputted to the PR 77 in accordance with the same procedure as that for the first source data.

The operation device 75 then performs an operation on the first source data and the second source data stored in the PR 76 and 77, the operation results are outputted to the register file 40.

The destination register specification code inputted by the instruction fetch section 30 is stored in the PR 78, and then inputted to the destination register determination circuit 74 at the right time when the number of vector elements similarly stored in the PR 79 is inputted.

The destination register determination circuit 74 then outputs a destination register selection signal for selecting a particular register to the register file 40 at the right time when the operation device 75 outputs the operation results to the register file 40.

By repeating the procedure, the operation results are sequentially written to particular destination registers in the register file 40.

As described above, the vector processor 1 according to this embodiment is provided with a vector register forming a ring buffer and any address of the ring buffer can be specified as the top address.

Thus, when multiple vector data to be processed are overlapped, it is possible to circularly read or write the vector data stored in one vector register without storing the vector data in separate vector registers.

Accordingly, it is possible to prevent the same data from being redundantly read as well as to decrease register resources to be required, thereby enabling an efficient vector operation using a vector register.

Furthermore, since it is possible to prevent the same data from being redundantly read, electric power consumption can be reduced. Furthermore, since register resources to be required are reduced, the circuit scale can be reduced and the processing efficiency can be improved.

Though it has been described in this embodiment that both of the first source data and the second source data are stored in a vector register forming a ring buffer and processed, it is also possible to store only one of them in the vector register forming a ring buffer and the other in a common vector register or a scalar register and process them.

Though it has been described in this embodiment that the number of vector elements is specified by an instruction code, it is also possible to store the number of vector elements in the register file 40 or in a different register and specify the register.

## Claims

1. A vector processor for processing vector data comprising multiple element data using a register, the vector processor comprising:
a register usable as a vector register comprisingmultiple element registers; and
an addressing circuit for circularly specifying addresses of the vector register with the address of any element register of the vector register as the top.

2. The vector processor according to claim 1, wherein the resister is a set of multiple scalar registers, and, by any of the scalar registers being specified as the top, the addresses of the multiple scalar registers are circularly specified.

3. The vector processor according to claim 1, wherein the register comprises a vector register, any element register of the vector register being specifiable as the top.

4. The vector processor according to any of claims 1 to 3, wherein, when performing a vector operation on data stored in the register, element data of the vector register are sequentially read from the addresses of the vector register beginning with the address specified as the top, and reading of the element data is continuable by returning to the top address if the end address is reached.

5. The vector processor according to any of claims 1 to 4, wherein, when writing the results of a vector operation to the register, element data of the vector register are sequentially written to the addresses of the vector register beginning with the address specified as the top, and writing of the element data is continuable by returning to the top address if the end address is reached.

6. Aregisteraddressingmethodusedforprocessingofvector data comprising multiple element data, wherein
a predetermined element register is treated as a vector register comprising multiple element registers, and, by specifying the address of any element register of the vector register as the top, the addresses of the element registers of the vector register are circularly specified.
